# EUROPÄISCHE PATENTSCHRIFT

(11) **EP 0 492 207 B1**
(45) Veröffentlichungstag und Bekanntmachung des Hinweises auf die Patenterteilung: **24.08.1994**
(21) Anmeldenummer: 91120926.0
(22) Anmeldetag: 06.12.1991
(51) Int. Cl.: F01D 5/14, B64C 11/26

(54) **Schaufel für Strömungsmaschinen**
Blade for flow-machines
Aube pour machines à écoulement

(30) Priorität: 21.12.1990 DE 4041104
(43) Veröffentlichungstag der Anmeldung: 01.07.1992
(73) Patentinhaber: MTU MOTOREN- UND TURBINEN-UNION MÜNCHEN GMBH, D-80976 München (DE)
(72) Erfinder: Schlosser, Werner, W-8000 München 50 (DE)

(56) Entgegenhaltungen:
- FR-A- 1 078 510
- US-A- 2 780 435
- US-A- 2 958 505
- PATENT ABSTRACTS OF JAPAN vol. 4, no. 68 (M-12)(550) 21. Mai 1980
- TRANSACTIONS OF THE AMERICAN SOCIETY OF MECHANICAL ENGINEERS. Bd. 79, Nr. 3,April 1957, NEW YORK US Seiten 648 - 649; ESGAR ET AL.:'RESEARCH ON APPLICATION OF COOLING TO GAS TURBINES'

## Beschreibung

Die Erfindung betrifft eine Schaufel für Strömungsmaschinen, insbesondere für Fanstrahltriebwerke und Propeller, bestehend aus einem mit diesem verbundenen Schaufelblatt, in dessen Innerem nebeneinander,zwischen Schaufelfuß und -spitze verlaufende Röhrchen angeordnet sind. Eine solche Schaufel ist aus der DE-PS 715 421 bekannt.

Der Fortschritt heutiger Flugantriebe, insbesondere von Fanstrahltriebwerken spiegelt sich in der zunehmenden Schubkraft und dem ökonomischeren Gesamtwirkungsgrad wieder. Ein erheblicher Anteil an diesem Erfolg, ist der optimierten Beschaufelung sowohl des Fans als auch des Verdichters und der Turbinen der verwendeten Gasturbinen zuzuschreiben. Die Grenze des technisch Machbaren wird dabei meist durch die thermisch und mechanisch hochbeanspruchten Schaufeln der Rotoren bestimmt; denn eine effektive Wirkungsgrad- und Schuberhöhung ist von einer entsprechenden Erhöhung der Turbineneintrittstemperatur abhängig. Mit dieser Maßnahme geht zweckmäßigerweise eine Anhebung der Wellendrehzahl einher, woraus sich die wachsenden Ansprüche an thermischer und mechanischer Belastbarkeit heutiger Triebwerksschaufeln erklären. Bei komplex geformten Schaufeln, wie beispielsweise die Schaufeln eines Propfans, bereitet es besondere Schwierigkeiten eine entsprechende Festigkeit mit der notwendigen Zuverlässigkeit zu verbinden.

Im Rahmen der vorhergehenden Problematik ist es aus der US-Patentschrift 3,644,059 bekannt, Turbinenschaufeln aus einer profilbestimmenden Außenhaut, einer mit der Außenhaut verbundenen offenzelligen Honigwabenstruktur und einer Vorrichtung zur Kühlluftführung auszubilden. Diese Honigwabenstruktur ist dabei öffnungsseitig mit der Außenhaut verbunden und erstreckt sich in das Profilinnere. Ziel dieser Ausgestaltung ist es, eine Transpirationskühlung der Schaufel zu ermöglichen und die Schaufel struktur zu verstärken. Die vorgesehene Ausrichtung der Honigwabenstruktur - die Stege der Honigwaben verlaufen quer zur Schaufellängsrichtung - erlaubt jedoch prinzipiell keine geeignete Lastübertragung in Schaufellängsrichtung. Da bekanntlich die rotierenden Schaufeln einer Gasturbine erheblichen Fliehkräften ausgesetzt sind, erweist sich die Ausrichtung der Honigwaben als nachteilig. Die zur Verstärkung der Schaufel vorgesehene hohle Strebe führt nicht nur zur Gewichtserhöhung und den damit verbundenen Nachteilen sondern erhöht den Fertigungsaufwand bei der Herstellung durch seine komplexe Formgebung erheblich. Um eine ausreichende Kühlung der Schaufel zu gewährleisten, sind zusätzlich Kühlkanäle in Schaufellängsrichtung vorgesehen, welche den Fertigungsaufwand weiter erhöhen und die Honigwabenstruktur schwächen.

In der gattungsbildenden DE-PS 715 421, wird eine Turbinenschaufel beschrieben, welche das Schaufelprofil ausfüllende Röhrchen aufweist, wobei die Röhrchen mittels Schweißgut umhüllt und miteinander verbunden werden, d.h. die Röhrchen sind im Schweißgut eingebettet. Die Profiloberfläche wird durch das die Röhrchen verbindende Schweißgut gebildet. Da die Zwischenräume von zu einem Bündel zusammengefaßten Röhrchen einen nicht unerheblichen Anteil der Profilquerschnittsfläche beanspruchen, bedeutet die Füllung dieser Zwischenräume mit, im Vergleich zu den Röhrchen schwerem Schweißgut, eine deutliche Gewichtserhöhung der Schaufel. Zu dem wird durch das Schweißgut eine vorwiegende Lastübertragung durch die Röhrchen in den Schaufelfuß vereitelt. Dem Schweißgut kommt demnach nicht nur die vergleichsweise unproblematische Aufgabe zu, die Röhrchen zu fügen sondern wirkt zusätzlich last- und wärmeübertragend. Neben diesen Einflüssen ist das Schweißgut an der Profiloberfläche zusätzlich erosiven Einflüssen des, die Schaufel umströmenden Fluides ausgesetzt, welche bei Turbinenschaufeln besonders ausgeprägt sind. Da Schweißgut prinzipiell empfindlich gegenüber der Spannungsrißkorrosion ist, kann bezweifelt werden, ob dieser Werkstoff für Oberflächen von Schaufeln in Strömungsmaschinen, insbesondere in Flugantrieben mit ihren hohen Sicherheitsanforderungen, geeignet ist.

Eine aus der US-Patentschrift 3,623,825 bekannte hohle Turbinenschaufel sieht zwar die Verwendung einer Vielzahl von Röhren in Schaufellängsachse zur Schaufelkühlung vor, jedoch sind diese Röhren aufgrund ihrer Einbaulage in einer besonderen Kammer nicht geeignet, Schaufellasten aufzunehmen und sinnvoll in den Schaufelfuß einzuleiten.

Auch die US-PS 2,866,618 offenbart die Verwendung von Röhrchen innerhalb einer Turbinenschaufel ausschließlich zu Kühlzwecken. Da die Röhrchen nicht lastübertragend in die Schaufelstruktur einbezogen sind, wirken diese zusätzlich gewichtserhöhend.

Hiervon ausgehend besteht die Aufgabe der Erfindung darin, eine Schaufel in Leichtbauweise so auszubilden, daß im Betrieb auftretende Lasten in geeigneter Weise in den Schaufelfuß bzw. bei Leitschaufeln in die Deckbänder eingeleitet werden. Weiterhin ist ein Verfahren zur Herstellung der Schaufel aufzuzeigen.

Erfindungsgemäß wird die Aufgabe dadurch gelöst, daß der Schaufelkern aus einem Bündel dicht bepackter von untereinander fest verbundener Röhrchen besteht, wobei Hohlräume zwischen den Röhrchen überwiegend vom Verbindungsmittel freibleiben und der Schaufelkern mit dem Schaufelfuß und mit der Innenseite der Schaufelschale über an der Schaufelschale anliegende Röhrchen fest verbunden ist.

Die erfindungsgemäße Anordnung hat den Vorteil, über das in Schaufellängsrichtung verlaufende Bündel von Röhrchen Lasten, insbesondere aus Fliehkräften resultierend, ohne weitere Umlenkungen des Schub- und/oder Kraftflusses über weitere Bauteile, in den Schaufelfuß einzuleiten. Spannungsspitzen werden somit vermieden oder zumindest stark reduziert, weshalb die Schaufellebensdauer steigt und Gewicht gespart werden kann. Die Aufteilung der Lasten auf eine Vielzahl von Röhrchen erhöht die Betriebssicherheit im Falle einer Beschädigung der Schaufel durch auftreffende Fremdkörper wie beispielsweise Eisbrocken, Steine und Vögel (FOD), da die Last der beschädigten Röhrchen auf benachbarte unbeschädigte Röhrchen umgelenkt wird und somit eine Eskalation des Schadens vermieden wird. Das Redundanzprinzip wird somit konsequent angewandt. Gleichzeitig ermöglicht das Bündel nicht nur die Lastaufnahme und -übertragung sondern stellt bei Bedarf über die in Schaufellängsrichtung verlaufenden Röhrchen eine Wärmetauscherfunktion bereit. Über die große Oberfläche der Röhrchen ist ein sehr großer Wärmestrom und damit eine hohe Kühlleistung möglich. Propeller hingegen, benötigen zum Schutz gegen Vereisung bei ungünstigen meteorologischen Bedingungen oftmals eine Enteisungsvorrichtung. Eine Beheizung der Propellerblätter über die Röhrchen eignet sich hierzu idealerweise . Eine gewichtsintensive Trennung von Last und wärmeübertragenden Bauteilen ist dank dieser Erfindung nicht erforderlich. Es ist das Verdienst der Erfindung, durch Verwendung einfach herzustellender Röhrchen bzw. Bündel von Röhrchen die Herstellungskosten einer Strömungsmaschine deutlich zu senken.

Aus Gründen einer vorteilhafteren Herstellbarkeit sieht eine alternative Ausgestaltung vor, die Schaufelschale aus zwei miteinander verbundenen dünnen Hälften zu gestalten, wobei die erste Hälfte die Druckseite und die zweite Hälfte die Saugseite der Schaufelschale bildet.

Im Sinne eines optimalen Wärmeübergangs zwischen Schaufelschale und -kern, bzw. eines durch das Bündel strömenden Fluids, einer möglichst direkten Lasteinleitung von der Schaufelschale in den -kern sowie der Leichtbauweise sind die weiteren Ausgestaltungen gemäß der Merkmale der Patentansprüche 3 bis 7 vorgesehen.

In alternativer Ausführung weisen die Röhrchen jeweils eine derart große Querschnittsfläche auf, daß sie sowohl mit der druckseitigen als auch mit der saugseitigen Hälfte der Schaufelschale verbunden sind. Diese Ausführung eignet sich besonders für Schaufeln mit weniger hohen Ansprüchen an Kühlung bzw. Heizung oder Festigkeit wie beispielsweise Statorschaufeln eines Niederdruckverdichters. Vorteilhaft ist dabei die einfache und wirtschaftliche Bauweise. Ebenso bietet sich eine derartige Kerngestaltung für besonders dünne Schaufelprofile an.

In bevorzugter Ausführung liegt die Größe der Röhrchenquerschnittsfläche im Bereich von 1 mm² bis 314 mm². Der Vorteil dieser Ausführung liegt nicht nur darin, daß die Röhrchengröße der Schaufelprofildicke flexibel eingepaßt werden kann, sondern auch darin, daß Röhrchen in diesem Größenbereich von vielen Herstellern angeboten werden.

In weiterer bevorzugter Ausführung weisen die Röhrchen eines Bündels unterschiedliche Längen auf. Vorteilhaft ist dabei, daß die Querschnittsfläche der Röhrchen nicht den normalerweise nach radial außen dünner und kürzer werdenden Schaufelprofilen angeglichen werden muß. Zu diesem Vorteil trägt auch die Ausführung gemäß des Merkmals nach Anspruch 10 bei.

Eine vorteilhafte Ausführung sieht vor, die Röhrchen derart zu krümmen daß sie der Schaufelverwindung folgen. Das aufwendige Zuschneiden des Bündels auf den Schaufelgrundriß kann bei der Herstellung somit reduziert werden. Weiterhin ist es möglich, auch die Röhrchen stark gekrümmter Schaufeln bis in den Schaufelfuß zu führen und an eine Kühl- oder Heizmittelzuführung anzuschließen.

Als Vorteil erweist sich die Ausführung, wonach die Röhrchen im Schaufelfuß befestigt sind. Somit können Kraftflußumleitungen, welche unerwünschte Spannungen in den betroffenen Bauteilen hervorrufen vermieden werden. Eine direkte Einleitung der Schaufellasten in die die Schaufel aufnehmende Vorrichtung ist somit gegeben.

Als vorteilhaft erweist sich die Ausbildung, wonach zumindest ein Teil der Röhrchen an ihrem fußseitigen Ende an einen Kanal zur Kühl- oder Heizmittelzuführung angeschlossen sind. Dies erlaubt eine einfache Zuführung des Heiz- bzw. Kühlmittels an das Bündel. Eine gezielte Kühl- bzw. Heizwirkung an besonderen Orten der Schaufel wird dadurch ermöglicht, daß ausgewählte Röhrchen an den Kanal angeschlossen sind. Bei Laufschaufeln wird der Kühl- bzw. Heizmittelstrom vom Schaufelfuß radial nach außen durch die Fliehkraftwirkung vorteilhaft unterstützt.

Eine zusätzliche vorteilhafte Weiterbildung zur gezielten Verteilung des Kühl- bzw. Heizmittels innerhalb des Schaufelkerns wird dadurch ermöglicht, daß die Röhrchen seitliche Öffnungen aufweisen, die die Innenräume benachbarter Röhrchen verbinden. Dabei erweist sich eine weitere Ausbildung als vorteilhaft, wonach die Außenseite der Schaufelschale und die Innenräume der mit der Schaufelschale unmittelbar verbundenen der Röhrchen über Öffnungen miteinander in Verbindung stehen. Dadurch kann eine, die Kühlwirkung verstärkende, Filmkühlung der Schaufel erzeugt werden.

Eine weitere vorteilhafte Ausführung ergibt sich daraus, daß zumindest ein Teil der Röhrchen an ihrem, dem Schaufelfuß gegenüberliegenden Ende verschlossen sind. Hierdurch kann bei Bedarf ein Kühl- bzw. Heizmittelstrom gezielt in ausgewählte Schaufelbereiche gelenkt werden und somit beispielsweise thermisch höher beanspruchte Schaufelbereiche mit entsprechend bemessenem Kühlmittel bevorzugt versorgt werden. Mit Hilfe dieser gezielten Kühlmittelzuführung läßt sich die Menge der Verdichterzapfluft zur Schaufelkühlung reduzieren. Der Wirkungsgrad des Kreisprozesses steigt deshalb. Zudem erhöht sich durch den festen Verschluß die Steifigkeit des Röhrchens und infolge dessen die der Schaufel. Zu diesen Vorteilen trägt auch die mögliche Ausgestaltung gemäß des Merkmals nach Anspruch 16 bei.

Den prinzipiell unterschiedlichen Anforderungen an Steifigkeit und/oder Festigkeit einer Schaufel wird die Ausführung in idealer Weise gerecht, wonach die zu verschließenden Röhrchen jeweils mit einem in die Röhrchen erstreckenden Stift fest verschlossen sind, wobei die Länge des Stiftes innerhalb eines jeweiligen Röhrchens auf die erfordliche Steifigkeit und/oder Festigkeit der Schaufel abgestimmt ist. Eine örtlich unterschiedliche erwünschte Festigkeit und/oder Steifigkeit innerhalb der Schaufel kann ebenso vorteilhaft erzielt werden. In diesem Sinne trägt auch die Ausgestaltung gemäß der Merkmale nach Anspruch 18 bei.

Die Aufgabe, ein Verfahren zur Herstellung einer Schaufel gemäß der Ansprüche 1 bis 18 anzugeben, wird erfindungsgemäß durch die im Kennzeichnungsteil des Patentanspruchs 19 und vorzugsweise der in den Patentansprüchen 20 bis 25 angegebenen Verfahrensschritte gelöst.

Das Verfahren gemäß des Patentanspruchs 19 hat den Vorteil, daß die einzelnen Verfahrensschritte automatisierbar sind und somit eine wirtschafltiche Massenherstellung der Schaufel möglich ist.

Bezüglich vorteilhafter Verfahrensschritte der Erfindung wird auf die Merkmale der Patentansprüche 20 bis 25 verwiesen.

Die Erfindung wird nachfolgend anhand der beigefügten Zeichnungen weiter erläutert. Dabei zeigt:
- Fig. 1: einen Schnitt längs durch eine Rotorschaufel mit drei, in die Zeichenebene geklappten, beispielhaften Schaufelquerschnitten,
- Fig. 2: eine vergrößerte Darstellung der in Fig. 1 gezeigten Schaufelquerschnitte, wobei die Schnitte zur Verdeutlichung der Schaufelschränkung übereinanderliegend gezeigt sind,
- Fig. 3: eine vergrößerte Abbildung des in Fig. 2 eingezeichneten Ausschnitts.

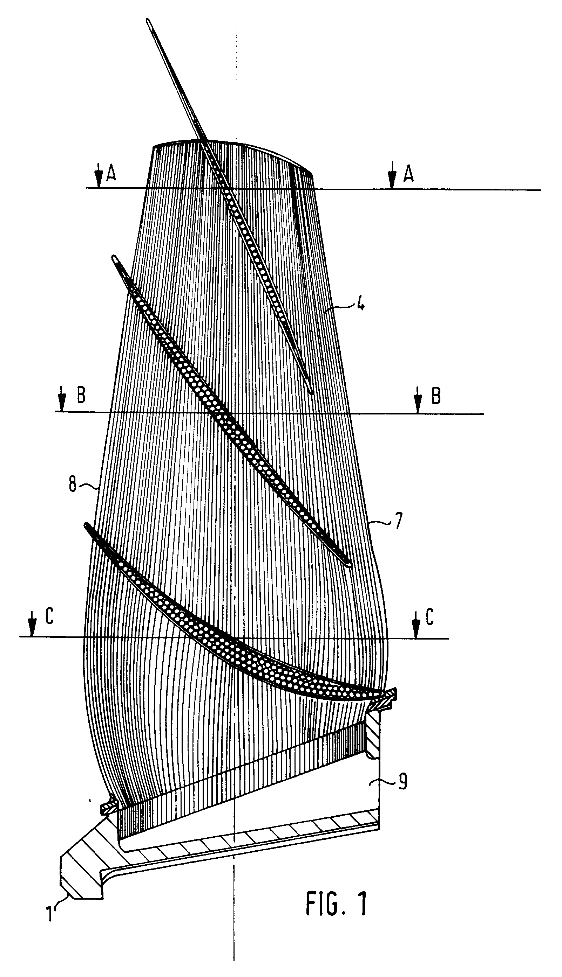

Der Schnitt gemäß Fig. 1 zeigt den Aufbau einer Rotorschaufel. Die Schaufel besteht aus einer den Schaufelkern 3 umhüllenden Schaufelschale 2 und einem mit der Schaufelschale 2 und dem Schaufelkern 3 verbundenen Schaufelfuß 1. Die Druckseite 5 und die Saugseite 6 der Schaufelschale 2 wird jeweils von einer entsprechend geformten Schaufelhälfte gebildet. Das Innere der Schaufel, der Schaufelkern 3, wird durch ein Bündel von runden Röhrchen 4 gebildet, wobei die Röhrchen 4 längs der Schaufellängsrichtung verlaufen. Diese sind miteinander, mit der Schaufelschale 2 und mit dem Schaufelfuß 1 fest verbunden. Die im Schaufelfuß 1 endenden Röhrchen 4 sind über einen Kanal 9 mit einer nicht näher gezeigten Vorrichtung zur Kühlmittelzuführung angeschlossen.

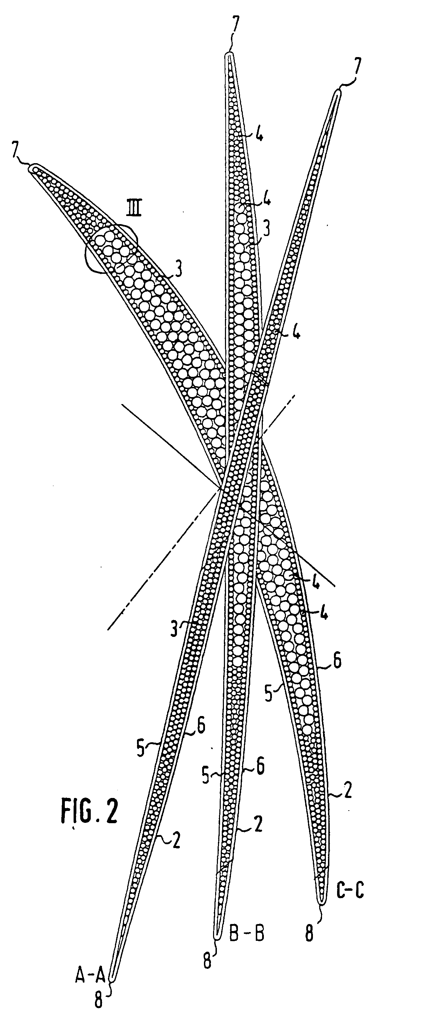

Fig. 2 zeigt Schaufelquerschnitte mit runden Röhrchen 4 zweierlei Durchmessers, wobei die dünneren Röhrchen 4 entlang der Innenseite der Schaufelschale 2 und dem Bereich der Schaufelvorderkante 7 und -hinterkante 8 angeordnet sind. Die dickeren Röhrchen 4 verlaufen im Inneren des Schaufelkerns 3, wobei sich die Anzahl der dickeren Röhrchen mit abnehmender Profildicke entsprechend verringert.

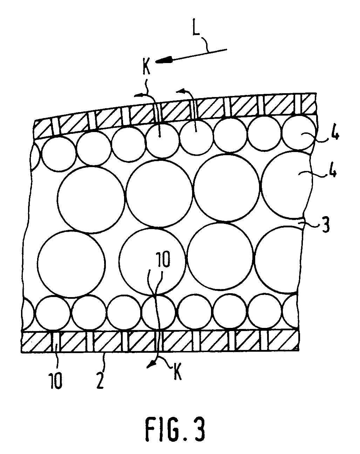

Fig. 3 gibt einen Ausschnitt wieder bei welchem die Schaufelschale 2 mit den Bohrungen 10 zwecks Kühlluftaustritt versehen sind. Die Bohrungen verbinden jeweils die Innenräume der an der Schaufelschale 2 anliegenden dünnen Röhrchen 4 mit der Schaufelaußenseite zur Ausbildung eines Kühlfilmes K an der Schaufelaußenseite.

## Patentansprüche

1. Schaufel für Strömungsmaschinen, insbesondere für Fanstrahltriebwerke und Propeller, bestehend aus einem Schaufelfuß (1) und einem mit diesem verbundenen Schaufelblatt, in dessen Innerem nebeneinander, zwischen Schaufelfuß (1) und -spitze verlaufende Röhrchen angeordnet sind, wobei das Schaufelblatt aus einer separaten, der Schaufel profilgebenden Schaufelschale (2) und einem im Hohlraum der Schaufelschale (2) angeordneten Schaufelkern (3) gebildet wird, dadurch gekennzeichnet, daß der Schaufelkern (3) aus einem Bündel dicht bepackter von untereinander fest verbundener Röhrchen (4) besteht, wobei Hohlräume zwischenden Röhrchen (4) überwiegend vom Verbindungsmittel frei bleiben und der Schaufelkern (3) mit dem Schaufelfuß (1)und mit der Innenseite der Schaufelschale (2) über an der Schaufelschale (2) anliegende Röhrchen (4) fest verbunden ist.

2. Schaufel nach Anspruch 1, dadurch gekennzeichnet, daß die Schaufelschale (2) aus zwei miteinander verbundenen dünnen Hälften besteht, wobei die erste Hälfte die Druckseite (5) und die zweite Hälfte die Saugseite (6) der Schaufelschale bildet.

3. Schaufel nach Anspruch 1 oder 2, dadurch gekennzeichnet, daß das Bündel einen schaufelprofilartigen Querschnitt aufweist.

4. Schaufel nach einem der Ansprüche 1 bis 3, dadurch gekennzeichnet, daß das Bündel aus Röhrchen (4) mit kreisrunder oder elliptischer Querschnittsfläche besteht.

5. Schaufel nach einem der Ansprüche 1 bis 4, dadurch gekennzeichnet, daß das Bündel aus Röhrchen (4) unterschiedlich großer Querschnittsfläche besteht.

6. Schaufel nach Anspruch 5, dadurch gekennzeichnet, daß diejenigen Röhrchen (4), welche mit der Innenseite der Schaufelschale (2) verbunden sind eine kleinere Querschnittsfläche aufweisen als innerhalb des Bündels.

7. Schaufel nach Anspruch 5 oder 6, dadurch gekennzeichnet, daß die Röhrchen im Bereich der Schaufelvorder- (7) und/oder Schaufelhinterkante (8) eine geringere Querschnittsfläche aufweisen als im dazwischen liegenden Bereich.

8. Schaufel nach einem der Ansprüche 1 bis 7, dadurch gekennzeichnet, daß das Bündel Röhrchen (4) unterschiedlicher Länge aufweist.

9. Schaufel nach Anspruch 8, dadurch gekennzeichnet, daß sich die Anzahl der Röhrchen (4) eines Schaufelquerschnittes mit abnehmender Profildicke verringert.

10. Schaufel nach einem der Ansprüche 1 bis 9, dadurch gekennzeichnet, daß die Röhrchen (4) derart gekrümmt sind, daß sie der Schaufelverwindung folgen.

11. Schaufel nach einem der Ansprüche 1 bis 10, dadurch gekennzeichnet, daß zumindest ein Teil der Röhrchen (4) an ihrem fußseitigen Ende an einen Kanal (9) zur Kühl- oder Heizmittelzuführung angeschlossen sind.

12. Schaufel nach Anspruch 11, dadurch gekennzeichnet, daß die Röhrchen (4) seitliche Öffnungen (10) aufweisen, die die Innenräume benachbarter Röhrchen (4) verbinden.

13. Schaufel nach Anspruch 11 oder 12, dadurch gekennzeichnet, daß die Außenseite der Schaufelschale (2) und die Innenräume der mit der Schaufelschale (2) unmittelbar verbundenen Röhrchen (4) über Öffnungen (10) miteinander in Verbindung stehen.

14. Schaufel nach einem der Ansprüche 10 bis 13, dadurch gekennzeichnet, daß zumindest ein Teil der Röhrchen (4) an ihrem, dem Schaufelfuß (1) gegenüberliegenden Ende fest verschlossen sind.

15. Schaufel nach einem der Ansprüche 1 bis 14, dadurch gekennzeichnet, daß ein Teil der Röhrchen (4) an ihrem fußseitigen Ende verschlossen sind.

16. Schaufel nach Anspruch 14 oder 15, dadurch gekennzeichnet, daß die zu verschließenden Röhrchen (4) jeweils mit einem in die Röhrchen erstreckenden Stift verschlossen sind, wobei die Länge des Stiftes innerhalb eines jeweiligen Röhrchens (4) auf die erforderliche Steifigkeit und/oder Festigkeit der Schaufel abgestimmt ist.

17. Schaufel nach einem der Ansprüche 1 bis 16, dadurch gekennzeichnet, daß ein Teil der Röhrchen (4) durch Drähte ausgetauscht ist, wobei der Ort und die Anzahl der Drähte auf die erforderliche Steifigkeit und/oder Festigkeit der Schaufel abgestimmt ist.

18. Verfahren zur Herstellung einer Schaufel nach einem der Ansprüche 1 bis 18, das durch folgende Verfahrensschritte gekennzeichnet ist:
a) Zusammenstellen eines Bündels von Röhrchen (4),
b) Verbinden der Röhrchen mit einem Schaufelfuß (1),
c) Verformung des Bündels in Schaufelprofilform,
d) Zusammenfügen der Schaufelschale (2) mit dem Bündel und dem Schaufelfuß (1),
e) Verbinden der Röhrchen (4) miteinander.

19. Verfahren nach Anspruch 18, dadurch gekennzeichnet, daß die Röhrchen (4) miteinander und/oder mit dem Schaufelfuß (1) bzw. der Schaufelschale (2) mittels Diffusionsschweißung verbunden werden.

20. Verfahren nach Anspruch 18 dadurch gekennzeichnet, daß die Röhrchen (4) mittels Hartlötung mit dem Schaufelfuß (1) verbunden werden.

21. Verfahren nach Anspruch 18, dadurch gekennzeichnet, daß das Bündel heißisostatisch in Schaufelprofilform verpreßt wird.

22. Verfahren nach Anspruch 18, dadurch gekennzeichnet, daß die Schaufelschale (2) durch eine pulvermetallurgische Ummantelung des Bündels erzeugt wird.

23. Verfahren nach Anspruch 18, dadurch gekennzeichnet, daß die Schaufelschale (2) durch Verlöten oder Diffusionsverschweißen vorgeformter Blechhälften gefertigt wird.

24. Verfahren nach Anspruch 18, dadurch gekennzeichnet, daß die Schaufelschale (2) durch Verlöten oder Diffusionsverschweißen zweier geschmiedeter Formhälften gefertigt wird.

## Claims

1. A blade for flow machines, particularly for fan jet engines and propellers, consisting of a blade foot (1) and a blade leaf connected thereto, on the inside of which are arranged small tubes, extending next to one another between the blade foot (1) and the blade tip, wherein the blade leaf is formed from a separate blade shell (2), defining the profile of the blade, and a blade core (3) arranged in the cavity of the blade shell (2), characterised in that the blade core (3) consists of a bundle of tightly packed small tubes (4) firmly connected to one another, wherein cavities between the small tubes (4) remain largely free of connecting means and the blade core (3) is firmly connected to the blade foot (1) and to the inside of the blade shell (2) via small tubes (4) lying against the blade shell (2).

2. A blade according to claim 1, characterised in that the blade shell (2) consists of two thin halves connected to one another, wherein the first half forms the pressure side (5) and the second half forms the suction side (6) of the blade shell.

3. A blade according to claim 1 or 2, characterised in that the bundle has a blade profile-like cross-section.

4. A blade according to one of claims 1 to 3, characterised in that the bundle consists of small tubes (4) with circular or elliptical cross-sectional surfaces.

5. A blade according to one of claims 1 to 4, characterised in that the bundle consists of small tubes (4) with cross-sectional surfaces of different sizes.

6. A blade according to claim 5, characterised in that those small tubes (4) which are connected to the inside of the blade shell (2) have a smaller cross-sectional surface than those inside the bundle.

7. A blade according to claim 5 or 6, characterised in that the small tubes in the region of the blade front edge (7) and/or blade rear edge (8) have a smaller cross-sectional surface than those in the region lying therebetween.

8. A blade according to one of claims 1 to 7, characterised in that the bundle has small tubes (4) of different lengths.

9. A blade according to claim 8, characterised in that the number of small tubes (4) of a blade cross-section reduces as the profile thickness decreases.

10. A blade according to one of claims 1 to 9, characterised in that the small tubes (4) are curved such that they follow the curvature of the blade.

11. A blade according to one of claims 1 to 10, characterised in that at least a portion of the small tubes (4) are connected, at their ends at the foot, to a conduit (9) for supplying coolant or heating medium.

12. A blade according to claim 11, characterised in that the small tubes (4) have lateral openings (10) which connect the inner spaces of adjacent small tubes (4).

13. A blade according to claim 11 or 12, characterised in that the outside of the blade shell (2) and the inner spaces of the small tubes (4) connected directly to the blade shell (2) communicate with one another via openings (10).

14. A blade according to one of claims 10 to 13, characterised in that at least a portion of the small tubes (4) are permanently closed at their end lying opposite the blade foot (1).

15. A blade according to one of claims 1 to 14, characterised in that a portion of the small tubes (4) are closed at their ends at the foot.

16. A blade according to claim 14 or 15, characterised in that the small tubes (4) to be closed are each closed with a pin extending into the small tubes, wherein the length of pin inside each small tube (4) is matched to the required rigidity and/or strength of the blade.

17. A blade according to one of claims 1 to 16, characterised in that a portion of the small tubes (4) are replaced by wires, wherein the location and the number of wires is matched to the required rigidity and/or strength of the blade.

18. A method of producing a blade according to one of claims 1 to 18, which is characterised by the following steps of the method:
a) Composition of a bundle of small tubes (4),
b) Connection of the small tubes to a blade foot (1),
c) Shaping of the bundle into the shape of a blade profile,
d) Joining of the blade shell (2) with the bundle and the blade foot (1),
e) Connection of the small tubes (4) to one another.

19. A method according to claim 18, characterised in that the small tubes (4) are connected to one another and/or to the blade foot (1) or the blade shell (2) by diffusion welding.

20. A method according to claim 18, characterised in that the small tubes (4) are connected to the blade foot (1) by brazing.

21. A method according to claim 18, characterised in that the bundle is pressed into the shape of the blade profile by high-temperature isostatic means.

22. A method according to claim 18, characterised in that the blade shell (2) is produced by means of a powder metallurgy casing of the bundle.

23. A method according to claim 18, characterised in that the blade shell (2) is produced by soldering or diffusion welding preformed sheet metal halves.

24. A method according to claim 18, characterised in that the blade shell (2) is produced by soldering or diffusion welding two forged halves.

## Revendications

1. Aube pour machines à écoulement, en particulier pour réacteurs à double flux et hélices, consistant en un pied d'aube (1) et une pale reliée à celui-ci à l'intérieur de laquelle sont disposés côte à côte des petits tubes s'étendant entre le pied de l'aube et la pointe de l'aube, la pale étant constituée d'une coque séparée (2) formant le profil de l'aube et d'un coeur (3) disposé dans l'espace creux de la coque de l'aube (2), aube caractérisée en ce que le coeur (3) de l'aube consiste en un faisceau de petits tubes (4) réunis de façon solidaire les uns aux autres en étant empaquetés de façon serrée, les espaces creux entre les petits tubes (4) restant de façon prépondérante exempts de moyens de liaison et le coeur (3) de l'aube étant relié solidairement au pied (1) de l'aube et à la face intérieure de la coque (2) de l'aube par l'intermédiaire des petits tubes (4) reposant sur la coque (2) de l'aube.

2. Aube selon la revendication 1, caractérisée en ce que la coque d'aube (2) se compose de deux moitiés minces reliées l'une à l'autre, la première moitié formant la face de pression (5) et la seconde moitié formant la face d'aspiration (6) de la coque d'aube.

3. Aube selon la revendication 1 ou 2, caractérisée en ce que le faisceau présente une section transversale ayant un profil d'aube.

4. Aube selon l'une des revendications 1 à 3, caractérisée en ce que le faisceau se compose de petits tubes (4) ayant une surface de section transversale circulaire ou elliptique.

5. Aube selon l'une des revendications 1 à 4, caractérisée en ce que le faisceau se compose de petits tubes (4) ayant des surfaces de section transversale de différentes grandeurs.

6. Aube selon la revendication 5, caractérisée en ce que les petits tubes (4) qui sont reliés au côté intérieur de la coque d'aube (2) présentent une surface de section transversale plus petite qu'à l'intérieur du faisceau.

7. Aube selon la revendication 5 ou 6, caractérisée en ce que les petits tubes présentent dans la zone du bord antérieur (7) de l'aube et/ou du bord postérieur (8) de l'aube une surface de section transversale plus petite que dans la zone qui se trouve entre ces bords.

8. Aube selon l'une des revendications 1 à 7, caractérisée en ce que le faisceau présente des petits tubes de longueurs différentes.

9. Aube selon la revendication 8, caractérisée en ce que le nombre des petits tubes (4) d'une section transversale d'aube va en diminuant avec la grosseur décroissante du profil.

10. Aube selon l'une des revendications 1 à 9, caractérisée en ce que les petits tubes sont courbés de telle façon qu'ils suivent la torsion de l'aube.

11. Aube selon l'une des revendications 1 à 10, caractérisée en ce qu'au moins une partie des petits tubes (4) est raccordée, à l'extrémité située du côté du pied, à un canal (9) servant à l'alimentation de l'agent de refroidissement ou de chauffage.

12. Aube selon la revendication 11, caractérisée en ce que les petits tubes (4) présentent des ouvertures latérales (10) qui relient les chambres intérieures des petits tubes (4) voisins.

13. Aube selon la revendication 11 ou 12, caractérisée en ce que la face extérieure de la coque d'aube (2) et les chambres intérieures des petits tubes (4) reliées directement à la coque d'aube (2) sont en liaison les unes avec les autres par l'intermédiaire d'orifices (10).

14. Aube selon l'une des revendications 10 à 13, caractérisée en ce qu'au moins une partie des petits tubes (4) est fermée à son extrémité située en regard du pied d'aube (1).

15. Aube selon l'une des revendications 1 à 14, caractérisée en ce qu'une partie des petits tubes (4) est fermée à son extrémité située du côté du pied.

16. Aube selon la revendication 14 ou 15, caractérisée en ce que les petits tubes (4) à fermer sont respectivement fermés par une tige s'étendant dans ces petits tubes, la longueur de la tige à l'intérieur d'un petit tube respectif (4) étant adaptée à la rigidité et/ou la résistance nécessaire de l'aube.

17. Aube selon l'une des revendications 1 à 16, caractérisée en ce qu'une partie des petits tubes (4) est remplacée par des câbles, l'emplacement et le nombre des câbles étant adaptés à la rigidité et/ou à la résistance nécessaire de l'aube.

18. Procédé de fabrication d'une aube selon l'une des revendications 1 à 18, procédé caractérisé par les étapes suivantes :
a) assemblage d'un faisceau de petits tubes (4)
b) réunion des petits tubes à un pied d'aube (1)
c) mise en forme du faisceau à la forme du profil de l'aube
d) jonction de la coque d'aube (2) avec le faisceau et le pied d'aube (1)
e) réunion des petits tubes (4) les uns aux autres.

19. Procédé selon la revendication 18, caractérisé en ce que les petits tubes (4) sont reliés les uns aux autres et/ou au pied d'aube (1) ou à la coque d'aube (2) au moyen d'un soudage par diffusion.

20. Procédé selon la revendication 18, caractérisé en ce que les petits tubes (4) sont reliés au moyen d'un brasage fort au pied d'aube (1).

21. Procédé selon la revendication 18, caractérisé en ce que le faisceau est pressé isostatiquement à chaud pour être mis à la forme du profil de l'aube.

22. Procédé selon la revendication 18, caractérisé en ce que la coque d'aube (2) est produite par un enrobage par métallurgie des poudres du faisceau.

23. Procédé selon la revendication 18, caractérisé en ce que la coque d'aube (2) est fabriquée en moitiés de tôle préformées par brasage ou par soudage par diffusion.

24. Procédé selon la revendication 18, caractérisé en ce que la coque d'aube (2) est fabriquée par brasage ou soudage par diffusion de deux moitiés forgées.
